# FASCICULE DE BREVET EUROPEEN

(11) **EP 2 273 759 B1**
(45) Date de publication et mention de la délivrance du brevet: **14.03.2012**
(21) Numéro de dépôt: 10162984.8
(22) Date de dépôt: 17.05.2010
(51) Int. Cl.: H04L 29/08, H04L 29/14

(54) **Réplication optimisée dans un réseau pair-à-pair**
Optimierte Datenreplikation in Peer-to-Peer-Netzen
Optimised data replication in peer-to-peer networks

(30) Priorité: 24.06.2009 FR 0903062
(43) Date de publication de la demande: 12.01.2011
(73) Titulaire: Alcatel Lucent, 92700 Colombes (FR)
(72) Inventeur: Tombroff, Dimitri, 91620 Nozay (FR); Millon, Yves, 44708 Orvault (FR)
(74) Mandataire: Nicolle, Olivier

(56) Documents cités:
- WO-A1-2008/102195
- XIAOHUI GU ET AL: "peerTalk: A Peer-to-Peer Multiparty Voice-over-IP System" IEEE TRANSACTIONS ON PARALLEL AND DISTRIBUTED SYSTEMS, IEEE SERVICE CENTER, LOS ALAMITOS, CA, US, vol. PP, no. 4, 1 avril 2008 (2008-04-01), pages 515-528, XP011202144 ISSN: 1045-9219
- JENS FIEDLER ET AL: "Reliable VoIP Services Using a Peer-to-Peer Intranet" MULTIMEDIA, 2006. ISM'06. EIGHTH IEEE INTERNATIONAL SYMPOSIUM ON, IEEE, PI, 1 décembre 2006 (2006-12-01), pages 121-130, XP031041773 ISBN: 978-0-7695-2746-8

## Description

La présente invention est revive au déploiement d'un réseau pair-à-pair sur un ensemble d'équipements de traitement, ou noeuds. Elle concerne plus particulièrèment l'utitisation de ces réseaux pair-à-pair pour des applications de télécommunication.

Il est connu de distribuer certaines applications de télécommunication notamment sur un ensemble d'équipements ou noeuds de traitement. De cette façon, chaque équipement ne traite qu'une partie des requêtes de service adressées à l'application et il est possible de dimensionner, de façon éventuellement dynamique, le nombre d'équipement en fonction des ressources nécessaires pour traiter ces requêtes. Une telle architecture permet également de rendre l'application facilement tolérante aux fautes du fait de la redondance inhérente des équipements entre eux.

Les requêtes de service peuvent être transportées par différents protocoles de communication, comme par exemple les protocoles SIP (Session Initiation Protocol), HTTP (HyperText Transfer Protocol)... et les application mises en oeuvre sur le réseau pair-à-pair N également de différentes natures.

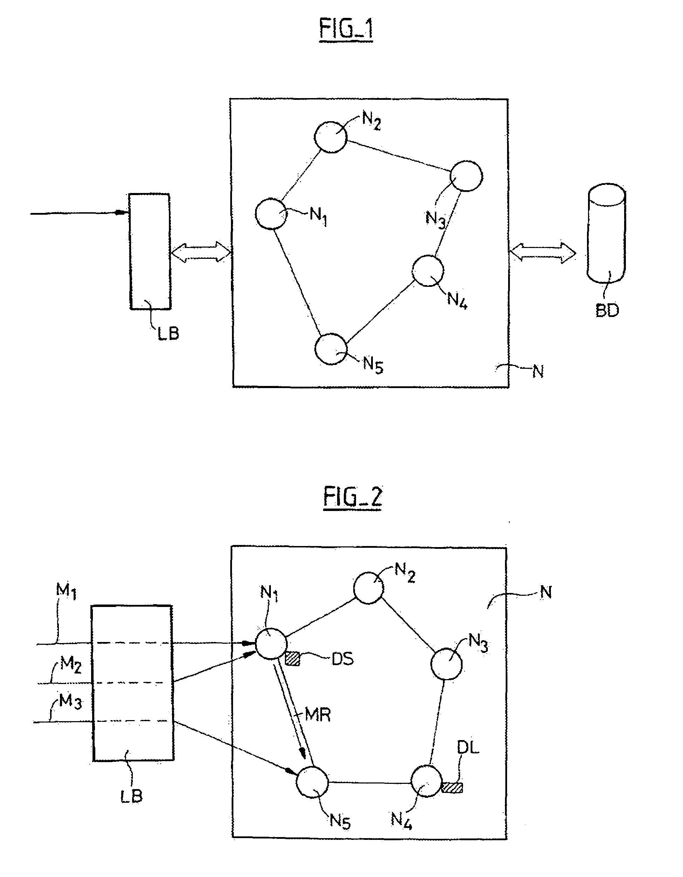

La figure 1 schématise une architecture telle que celle dans laquelle s'inscrit l'invention: un ensemble N de noeuds N1, N2, N3, N4, N5 sont connectés ensemble et forment un réseau pair-à-pair. Les noeuds peuvent être des équipements, des modules logiciels (processus) ou toute entité matérielle ou logicielle permettant d'exécuter une application. Chacun des noeuds implémente la même application, de sorte que chaque nouvelle requête de service puisse être traitée indifféremment par n'importe lequel de ces noeuds.

Un dispositif de répartition de charge LB est classiquement placé en amont du réseau pair-à-pair N afin d'acheminer les requêtes de services vers un des noeuds. Le choix de ce dernier est effectué selon différents critères qui peuvent être mis en oeuvre par le dispositif de répartition de charge LB. Notamment celle-ci peut avoir connaissance de la charge des différents noeuds et choisir d'acheminer une nouvelle requête vers le noeud le moins chargé à ce moment-là.

Certaines applications nécessitent la création d'une session pour traiter plusieurs requêtes liées. Par exemple le traitement d'un appel par le protocole SIP peut nécessiter de créer une session au moment du premier message d'invitation « Invite» jusqu'à Ici libération de l'appel par un message de terminaison « Bye » Il peut également être nécessaire de mémoriser des données relatives à la session pendant tout ou partie de la durée de celle-ci. Ces données peuvent permettre à un élément de signalisation SIP (ou « proxy SIP ») de traiter un message en fonction du statut de la session SIP.

Dans la plupart des cas, le dispositif de répartition de charge LB transmet les messages d'une même session à un même noeud du réseau pair-à-pair N. De cette façon, ce noeud peut mémoriser les données relatives à la session localement, et y avoir accès pour le traitement de toute nouvelle requête.

Toutefois, le comportement des dispositifs de répartition de charge n'est pas garanti. Si celui-ci est victime d'un dysfonctionnement ou d'un remplacement, les nouvelles requêtes associées à une session peuvent être acheminées à un autre noeud, De même, certaines règles au sein de ce dispositif LB peuvent répartir la charge liée à une même session sur plusieurs noeuds ; par exemple, si des messagers associés à une même session arrivant à intervalle trop court, il peut décider d'en acheminer une partie sur un autre noeud pour éviter de saturer le premier noeud choisi.

Aussi se pose le problème de l'accès aux données relatives à la session pour le nouveau noeud choisi.

Une première solution pourrait consister en la mémorisation de l'ensemble des données dans une base de données BD accessible de chaque noeud N1, N2, N3, N4, N5.

Néanmoins une telle approche souffre de deux inconvénients importants : toute requête nécessite un accès supplémentaire à la base de données BD qui peut s'avère coûteux, voire impossible à mettre en oeuvre dans le cadre d'une application de télécommunication temps-réel. En outre, la base de données BD forme un point centralisé qui peut donc constituer un goulot d'étranglement en cas de charge importante, et un point critique en cas de déficience : si la base de données devient inopérante, l'ensemble du système devient paralysé.

Une seconde solution pourrait consister à mémoriser les données relatives à la session dans les noeuds du réseau pair-a-pair et à organiser celui-ci sous une forme de table de hache distribuée (DHT pour *Distributed Hash Table*). Le noeud mémorisant les données de session est déterminé par une fonction de hachage appliqué sur un identifiant de cette session.

Le problème posé par la base de données centrale est résolu, mais cette solution possède l'inconvénient de quasi-systématiquement requérir des échanges de messages supplémentaires. En effet, la probabilité pour que le dispositif de répartition de charge LB transmette une requête entrante vers le noeud correspondant à la session associée à cette requête est d'autant plus faible que lé nombre de noeuds est grand Aussi, le noeud déterminé par le dispositif LB doit interroger la table de hachage distribuée pour récupérer les données relatives à la session, à chaque fois.

Ce mécanisme alourdit considérablement le traitement d'une requête et rend le système peu apte à faire face à de nombreuses requêtes et à un traitement temps-réel de celles-ci.

Par example, WO 2008/102195 A1 décrit un réseau pair-à-pair où la tolérance aux fautes est obtenue par duplication des informations d'une session au moyen de replices avant la détection d'un noeud défaillant.

L'état de la technique ne permet donc pas de résoudre de façon satisfaisante le problème général de la mise en oeuvre d'une application de télécommunication gérant des données de session par un réseau pair-à-pair.

Le but de l'invention est de proposer un réseau pair-à-pair permettant d'implémenter de telles applications, ainsi qu'un mécanisme de gestion des défaillances d'un noeud au sein d'un tel réseau pair-à-pair.

Pour ce faire, l'invention a pour premier objet un procédé de de gestion de défaillances pour un système de communication comprenant un réseau pair-à-pair composé d'un ensemble de noeuds et un dispositif de répartition de charge prévu pour acheminer une requête de service vers un noeud particulier de cet ensemble.

L'invention a ainsi pour objet un procédé de gestion de défaillance pour un système de communication comprenant un réseau pair-à-pair composé d'un ensemble de noeuds aptes à traiter des requêtes de service et un dispositif de répartition de charge prévu pour acheminer une requête de service vers un noeud particulier de cet ensemble, le réseau pair-a-pair formant une table de hachage distribuée. Ce noeud particulier détermine un identifiant de la sessions associée à la requête de service et si des données relatives à la session existent au sein du réseau pair-à-pair.

Le procédé se caractérise en ce que
- si tel n'est pas le cas, le noeud particulier crée des données relatives à cette session, les mémorise dans sa propre mémoire et mémorise au sein de la table de hachage distribuée une association entre l'identifiant de session et sa localisation (DX) au sein du réseau pair-a-pair,
- et en ce qu'à la détection d'un noeud défaillant au sein du réseau pair-à-pair, le noeud particulier transmet un message de remplissage au successeur du noeud défaillant, contenant au moins l'identifiant de chaque session dont les données sont mémorisées dans la mémoire et dont l'association entre l'identifiant de session et la localisation était mémorisée dans le noeud défaillant.

Selon des mises en oeuvre de l'invention, le noeud particulier peut insérer en outre dans l'association, la localisation d'un noeud de duplication pour les données relative à la session.

L'invention a également pour objet un réseau pair-à-pair constitué d'un ensemble de noeuds, chacun possédant une interface pour recevoir des requêtes de services provenant d'un dispositif de répartition de charge, une mémoire pour mémoriser des données relatives aux sessions associées à ces requêtes de service, un processeur pour traiter les requêtes de service en fonction de ces données, et un dispositif de gestion pour détecter une défaillance d'un autre noeud du réseau pair-à-pair.

Le réseau se caractérise en ce que
- l'ensemble de noeuds forme une table de hachage distribuée mémorisant des associations entre des idéntifiants de session et la localisation des données relatives aux sessions correspondantes,
- en ce que chaque noeud est apte à, pour une nouvelle requêtes de service, déterminer s'il possède lui-même les données relatives à la session associée à cette nouvelle requête de service et dans le cas négatif interroger la table de hachage distribuée pour déterminer la localisation des données. Le dispositif de gestion est prévu pour, lors de la détection d'un noeud défaillant dans l'ensemble, transmettre un message de remplissage au successeur de ce noeud défaillant, contenant au moins l'identifient de chaque session dont les données sont mémorisées dans sa mémoire et dont l'association entre l'identifiant et la localisation était mémorisé dans le noeud défaillant.

Ce ne sont ainsi plus les données de session qui sont mémorisés via la table de hachage distribuée (DHT), mais des associations donnant leur localisation. Les données de session, elles, peuvent être sont mémorisés localement sur le noeud déterminé par le dispositif de répartition de charge LB, Lors de la défaillance du noeud mémorisant l'association, le noeud mémorisant les données de session est à même de transmettre au successeur du noeud défaillant les informations lui permettant de reconstruire l'association.

De cette façon, tout autre noeud voulant accéder aux données de la session saura qu'il doit interroger le noeud successeur du noeud défaillant (qui aurait normalement du contenir l'association) et ainsi obtenir la localisation.

L'invention et ses caractéristiques apparaîtront de façon plus claire dans la description qui va suivre en liaison avec les figures annexées.
La figure 1, précédemment commentée, illustre un réseau pair-à-pair selon l'état de la technique.
La figure 2 illustre un réseau pair-à-pair conforme à une mise en oeuvre de l'invention.
La figure 3 schématise un format possible de données de localisation mémorisé au sein de la table de hachage distribuée formée par le réseau pair-a-pair.
La figure 4 schématise une architecture simplifiée et fonctionnelle d'un noeud du réseau pair-a-pair.

Dans la mise en oeuvre de la figure 2, le réseau pair-à-pair N est composé d'un ensemble de noeuds N₁, N₂, N₃, N₄, N₅. Ces noeuds peuvent être des équipements de traitement distincts ou, plus couramment, des processus logiciels distincts. Dans ce dernier cas, ces processus logiciels sont activés sur un ou plusieurs équipements de traitement non représentés sur la figure.

Le réseau pair-à-pair N peut recevoir des messages ou requêtes de service M₁, M₂, M₃ provenant d'un dispositif de répartition de charge LB. Celui-ci peut mettre en oeuvre un algorithme de répartition de charge conforme à l'état de la technique dans le domaine. Cet algorithme lui permet d'acheminer les requêtes de services entrantes vers un noeud particulier parmi ceux du réseau pair-à-pair N.

La nature des requêtes de services dépend de l'application déployée par le réseau pair-a-pair N. Il peut mettre en oeuvre une application de télécommunication telle un élément de communication SIP (proxy SIP, serveur SIP). Les requêtes de services sont alors des messages conformes au protocole SIP tels que spécifiés dans le RFC 3260 de l'IETF. Il peut notamment donc s'agir de message d'invitation « Invite », d'enregistrement « Register », des messages d'accord « 200 Ok », de terminaison « Bye » etc.

L'application peut également être un serveur de présence et être apte à recevoir et traiter des messages SIP relatifs à la présence. Alternativement, elle peut être un serveur HTTP (HyperText Transfer Protocol) et les requêtes de services sont alors conformes à ce protocole HTTP. Il peut également s'agir de toute application de communication ayant à traiter des requêtes de services,

Plusieurs de ces requêtes de service M₁, M₂, M₃ peuvent être associées à une même session. Cette session est représentée par des données de session DS. Celles-ci peuvent comprendre un identificateur de l'état d'une machine à états mise en oeuvre par l'application pour traiter les requêtes de services. Elles peuvent également comprendre des informations communiquées dans une requête M₁ et qui peuvent ainsi être utilisées par d'autres requêtes M₂, M₃ associées à la même session. Certaines requêtes M₂, M₃ ne peuvent pas être traitées sans la connaissance de ces données de session DS.

Les noeuds disposent donc de mémoires pour mémoriser ces données de session DS, au moins durant la durée de vie de la session.

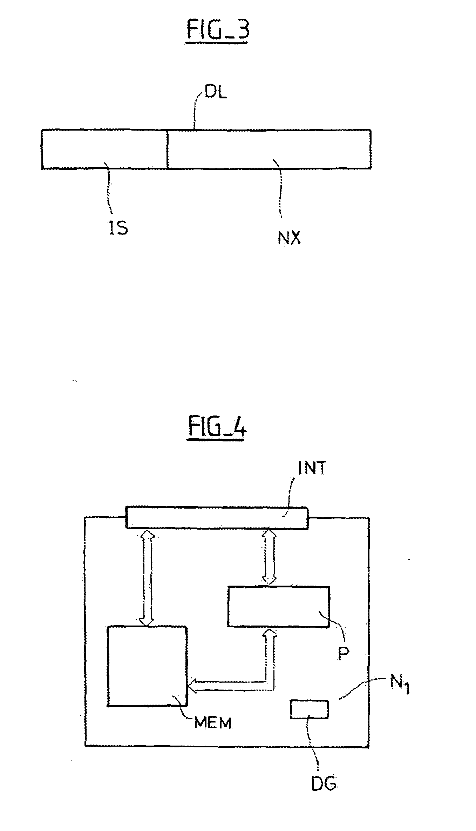

La figure 4 illustre une architecture interne fonctionnelle d'un noeud du réseau pair-à-pair N. Selon ce mode de réalisation, le noeud N₁ comprend une interface INT pour recevoir les requêtes de services M₁, M₂, M₃; une mémoire MEM pour mémoriser les données DS relatives aux sessions présentes sur ce noeud, et un processeur P pour traiter les requêtes de service, éventuellement en fonction des données DS stockées précédemment dans la mémoire MEM.

Le noeud comprend en outre un dispositif de gestion DG prévu notamment pour déterminer la défaillance d'un autre noeud du réseau pair-à-pair. Il sera étudié ultérieurement le mécanisme déclenché par ce dispositif lors d'une telle détection.

Selon l'invention, l'ensemble des noeuds N₁, N₂, N₃, N₄, N₅ forme une table de hachage distribuée.

Une table de hachage distribuée (DHT pour *Distributed Hash Table*) est une structure de données qui permet de répartir un moyen de mémorisation sur un ensemble d'éléments d'un réseau, chaque élément étant responsable d'une partie des données mémorisées et l'ensemble s'auto-organisant en fonction des données à mémoriser.

Différents mécanismes et algorithmes de gestion d'une table de hachage distribuée existent. On peut par exemple citer :
- le protocole CHORD qui a été pour la première fois défini dans l'article « Chord: A Scalable Peer-to-peer Lookup Service for Internet Applications » de Ion Stoica, Robert Morris, David Karger, M. Frans Kaashoek et Hari Balakrishnan.
- Le protocole CAN (Content-Adressable Network) qui a été décrit par l'article « A Scalable ContentAddressable Network » de Sylvia Ratnasamy, Paul Francis, Mark Handley, Richard Karp et Scott Shenke
- Le protocole P-Grid, défini sur la page web consacré : http://www.p-grid.org
- Le protocole Tapestry, décrit par l'article « Tapestry: A Resilient Global-Scale Overlay for Service Deployment » de Ben Y. Zhao, Ling Huang, Jeremy Stribling, Sean C. Rhea, Anthony D. Joseph et and John D. Kubiatowicz.

L'invention est indépendante du type d'algorithme utilisé et peut donc s'appliquer à ces différents exemples d'implémentation ainsi qu'a d'autres non mentionnés.

Dans la table de hachage distribuée, chaque noeud possède une mémoire MEM. Les informations qui y sont stockées sont accessibles par une clé sur laquelle on applique une fonction de hachage qui détermine l'élément associée à cette clé. Généralement, la fonction de hachage fournit une valeur entière qui peut parcourir un espace plus grand que celui du nombre de noeud. Auquel cas, le numéro de noeud est déterminé par cette valeur modulo le nombre de noeuds dans le réseau pair-à-pair.

Dans le cadre de l'invention, la table de hachage distribuée formée par les noeuds du réseau pair-à-pair mémorise des associations DL entre identifiants de session et la localisation des données relatives à ces sessions. Plus précisément donc, ce sont les associations DL stockées dans la mémoire MEM de chaque noeud qui forme la table de hachage distribuée (DHT).

La figure 3 schématise une structure de données possible pour stocker l'association DL entre l'identifiant de session IS et la localisation NX. Cette localisation peut être un identifiant d'un noeud appartenant ou réseau, pair-à-pair N ; par exemple un numéro d'ordre si le réseau pair-à-pair est structuré de façon circulaire comme dans l'exemple de la figure 2.

L'identifiant de session IS est une valeur permettant de déterminer une session unique au sein du réseau N et qui découle des informations contenues dans les requêtes de service M1, M2, M3.

Cet identifiant de session peut par exemple être l'entête « Call Id » contenu dans les requêtes SIP.

Il peut également s'agir d'une chaine de caractères identifiant la session et susceptible d'être mise à différents endroits du message (entête « Via », « Route » etc.). Une telle chaîne de caractère est par exemple décrite dans la demande de brevet EP 1921819.

Dans le cadre d'une mise en oeuvre basée sur le protocole HTTP, l'identifiant de session peut consister en tout ou partie du « cookie ».

La clé de la table de hachage distribuée (DHT) peut être l'identification de session IS.

Sur la figure 2, les trois messages M1, M2 et M3 représentent les trois situations à laquelle le réseau pair-à-pair N peut être confronté.

Le message (ou requête de service) M1 est un message créant une nouvelle session au sein du réseau. Cela peut par exemple être une requête « Invite » du protocole SIP contenant un nouvel entête « Call-Id ».

Le dispositif de répartition de charge achemine la requête de service M1 vers le noeud N1.

Ce noeud N1 détermine tout d'abord l'identifiant de session à partir des informations contenues dans le message M1. Il détermine ensuite si des données existent déjà pour cette session au sein du réseau pair-à-pair.

Pour ce faire, il peut interroger la table de hachage en fournissant l'identifiant de session IS comme clé. Dans ce cas de la première requête M1, la table de hachage répond qu'aucune donnée n'existe,

Il décide de créer les données de session DS à partir des informations contenues dans la requête M1 et de les mémoriser dans sa mémoire MEM locale.

Il crée également des données d'association DL, associant l'identifiant de session IS et une localisation NX l'identifiant au sein du réseau pair-à-pair. Dans l'exemple de la figure 2, cette localisation NX peut avoir pour valeur « 1 » et identifie le noeud N₁ au sein de l'ensemble N₁, N₂, N₃, N₄, N₅

Cette association DL est ensuite mémorisée au sein de la table de hachage.

Ainsi qu'il a été expliqué précédemment, cette mémorisation est effectuée en appliquant une fonction de hachage sur la clé de cette association (par exemple, l'identifiant de session IS) et en la modulant, le cas échéant, par le nombre de noeuds dans cette table (ici 5) afin de déterminer un second noeud au sein de la table pour y mémoriser cette association. On suppose dans l'exemple de la figure 2 que ce second noeud est le noeud N₄. Il est à noter que ce second noeud peut éventuellement être le même que le noeud N₁ mémorisant les données de session DS.

Lorsque le dispositif de répartition de charge LB reçoit une deuxième requête de service M2 relative à la même session, il peut l'acheminer ou même noeud N₁. Souvent, ainsi qu'il a été expliqué plus haut, il est même prévu pour, dans le cas normal, acheminer les requêtes d'une même session vers le même noeud du réseau pair-a-pair N.

Ce noeud N₁ détermine comme précédemment si des données DS relatives à la session existent dans le réseau N. Puis, comme c'est ici le cas, il détermine s'il possède lui-même ses données. En effet, le procédé selon l'invention repose sur le présupposé que le dispositif de répartition de charge est bien conçu et donc que dans l'immense majorité des cas le noeud recevant une requête sera celui qui possède les données qui lui sont relatives.

C'est ici le cas et le noeud N₁ peut ainsi traiter la requête de service à l'aide des données DS associés à la session.

On suppose que la troisième requête de service M3 est transmise au noeud N5, à la suite d'un dysfonctionnement. Ce dysfonctionnement peut être la détection d'une charge trop importante sur le noeud N₁, une panne du dispositif de répartition de charge LB, etc. Il peut aussi s'agir d'une procédure de mise à jour du logiciel qui requiert souvent un redémarrage des équipements.

Comme précédemment, le noeud N5 détermine que des données DS relatives à la session à laquelle la requête M3 appartient existent. Puis il détermine qu'il ne possède pas lui-même ses données, dans sa mémoire MEM.

Il interroge alors la table de hachage distribuée pour déterminer la localisation de ces données.

Il peut pour cela appliquer la fonction de hachage associée à la table, à la clé formée par l'identifiant de session IS. Le résultat lui fournit l'identifiant du noeud N₄ qui possède les données d'association DL.

A partir de ces données d'association DL, le noeud N₅ est à même de déterminer la localisation NX qui, dans cet exemple, identifie le noeud N1.

De différentes façons connues en soi, le noeud N₅ peut traiter la requête M3 avec les données DS mémorisées dans le noeud N₁. Il peut par exemple contacter le noeud N, pour récupérer une copie de ces données DS et traiter ainsi lui-même la requête. Il peut alternativement transmettre la requête M3 au noeud N₁ pour qu'il la traite. D'autres possibilités sont également envisageables.

L'invention permet donc d'optimiser les échanges entre noeud pour traiter les requêtes de service reçus, sans changer fondamentalement les mécanismes connus de gestion du réseau pair-à-pair.

Elle tire profit d'une propriété importante et intéressante des dispositifs de répartition de charge d'aiguiller les requêtes d'une même session vers le même noeud du réseau pair-a-pair. Dans cette situation majoritaire, elle permet en effet de minimiser le nombre d'échanges et la communication au sein du réseau N afin de maintenir un haut degré de performance.

Elle permet aussi de résoudre les cas problématiques d'un mauvais aiguillage sans pénaliser le cas majoritaire.

L'invention permet aussi de traiter les situations de défaillance d'un noeud du réseau pair-a-pair.

Il est connu en soi de dupliquer les données contenues dans un réseau pair-à -pair pour faire face à la défaillance d'un noeud.

Dans le cadre de l'invention, le réseau pair-à-pair contient deux types de données :
- les associations DL entre identifiants de session IS et localisation DX. Celles-ci sont mémorisées dans la table de hachage distribuée sur le réseau pair-a-pair.
- Les données relatives aux sessions, qui sont également distribuées sur les noeuds du réseau pair-à-pair.

L'exigence de tolérance aux fautes peut ainsi engendrer une complexité accrue du système. Ainsi, une première approche pourrait consister à dupliquer les deux types de données.

Si en théorie une telle approche semble possible, en pratique, elle engendrerait un trop grand nombre d'échanges de messages pour enregistrer une nouvelle session, accéder à une session existante ou la détruire. Chaque message requiert un minimum de traitement par chaque noeud (émetteur et récepteur) et donc tend à réduire les performances du système global.

En outre, il .est nécessaire d'imposer une règle pour déterminer sur quel noeud les données doivent être dupliquées. Chaque noeud peut ainsi appliquer cette règle pour retrouver les données recherchées à la suite de la défaillance d'un noeud. Cette règle peut consister à choisir le noeud successeur, c'est-à-dire celui qui immédiatement dans l'ordre de la chaîne circulaire des noeuds du réseau pair-a-pair.

Toutefois, l'imposition d'une telle règle suppose que le noeud successeur est un choix optimal, ce qui n'est bien évidemment pas le cas : par exemple, le noeud successeur peut être déployé sur une même machine et donc avoir une probabilité accru de subir une défaillance. Il peut aussi être trop chargé etc.

L'invention permet de résoudre également ces problèmes additionnels.

Comme décrit précédemment, les noeuds du réseau pair-à-pair possèdent un dispositif de gestion DG, apte à déterminer un noeud défaillant au sein du réseau pair-à-pair.

Lorsqu'un noeud subit une défaillance, en effet, les associations DL qu'il stockait sont perdues, Cependant, les sessions correspondantes sont toujours contenues dans les noeuds survivants.

À la suite de la détection d'une défaillance, il faut donc déclencher une procédure permettant que le successeur du noeud défaillant contienne toutes les associations entre les sessions et leur localisation DX précédemment stockées dans son successeur. C'est le rôle du dispositif de gestion DG de déclencher cette étape de « remplissage » du successeur du noeud défaillant.

Plus précisément, cette étape consiste à transmettre au successeur un ou plusieurs message de remplissage MR contenant au moins l'identifant de chaque session dont les données sont mémorisées dans la mémoire MEM du noeud et dont l'association DL entre l'identifiant de session IS et la localisation DX était mémorisée dans ledit noeud défaillant.

Ainsi, l'invention tire profil du fait que chaque noeud possède des informations parcellaires et qu'elle peut reconstituer les informations d'association complètes lorsque c'est nécessaire.

Lorsqu'un noeud détecte la défaillance de son prédécesseur, il doit en outre adopter un comportement particulier pour éviter la non-cohérence des réponses, Il doit notamment s'abstenir de répondre à toute requête de service tant qu'il n'a pas reçu les messages de remplissages MR de la part de l'ensemble des noeuds (non défaillants) du réseau pair-à-pair.

Il est donc à noter que tout noeud doit alors envoyer obligatoire un message de emplissage, même vide si sa mémoire MEM ne contient pas de données de session.

Dans l'exemple de la figure 2, on suppose que le noeud N4 subisse une défaillance. L'association DL est donc détruite et il devient impossible pour les noeuds du réseau pair-à-pair N de retrouver les données de session DS qui, portant, existent et sont correctement mémorisées.

Le dispositif de gestion DG du noeud N1 détecte cette défaillance. Il déclenche l'étape de « remplissage ». Durant cette étape, il va ainsi déterminer que les données de session DS qui sont dans sa mémoire MEM correspondent à l'association DL qui était mémorisée dons le noeud défaillant N4. Il va donc transmettre un message de remplissage MR au noeud N5 contenant au moins l'identifiant de la session en question.

Il peut en outre contenir la localisation DX, c'est-à-dire un identifiant du noeud N1, mais celui-ci peut également être déduit par le noeud N5 à la réception du message de remplissage MR.

A la réception de ce message MR, le noeud N5 peut reconstruire l'association DL entre l'identifiant de la session contenu dans le message et la localisation, contenue dans le message ou déduite.

Les outres noeuds N2, N3 procècent de même. Ils transmettent des messages de remplissage qui peuvent contenir un ou plusieurs identifiants de session ou être vides.

Le dispositif de gestion DG du noeud N5 détecte également la défaillance du noeud N4. Il déclenche l'étape de « remplissage » et détermine qu'il est le successeur du noeud défaillant. Il interrompt alors toute réponse aux requêtes de service qu'il pourrait recevoir. Ces requêtes peuvent être mises dans une mémoire tampon pour y être répondu plus tard. (En effet, à ce stade, une interrogation de la table de hachage distribuée peut donner une réponse incohérente si elle porte sur une session dont l'association avec sa localisation était mémorisée sur le noeud défaillant N4)

il reçoit alors les messages de remplissage de la part des autres noeuds. Lorsqu'il détermine avoir reçu un messages de remplissage (éventuellement vide) de l'ensemble des noeuds non défaillants du réseau pair-à-pair N, il peut reprendre son activité normale. Notamment il peut traiter les requêtes de service arrivant ainsi que celle éventuellement précédemment stockées dans la mémoire tampon.

Selon un mode de réalisation de l'invention, les données de session DS peuvent être dupliquées dons le réseau pair-à-pair N.

Selon un mode de réalisation de l'invention, le noeud dans lequel les données de session DS sont dupliquées est sur une plate-forme ou machine distincte de celle du noeud contenant les données primaires.

L'association DL doit contenir également la localisation d'un second noeud, celui où les données de session sont dupliquées. L'illustration de la figure devrait alors être modifiée afin de contenir en plus des champs IS et NX, un troisième champ, NX2 contenant la localisation du second noeud.

Plusieurs mises en oeuvre sont possibles.

Par exemple, chaque noeud possédant des données de session DS ou un duplicata des données de session transmet cette information dans un message de remplissage MR. Il peut en outre indiquer dans ce message de remplissage s'il possède la version primaire des données de session ou bien un duplicata.

## Revendications

1. Procédé de gestion de défaillance pour un système de communication comprenant un réseau, pair-a-pair (N) composé d'un ensemble de noeuds (N1, N2, N3, N4, N5) aptes à traiter des requêtes de service (M1, M2, M3) et une dispositif de répartition de charge (LB) prévu pour acheminer une requête de service vers un noeud particulier dudit ensemble, ledit réseau pair-a-pair) formant une table de hachage distribuée et ledit noeud particulier déterminait un identifiant (IS) de la session associée à ladite requête de servire et si des données (DS) relatives à ladite session existent au sein dudit réseau pair-à-pair, ledit procédé étant **caractérisé en ce que** si tel n'est pas le cas, ledit noeud particulier (N1) crée des données (DS) relatives à ladite session, les mémorise dans sa propre mémoire et mémoriser au sein de ladite table de hachage distribuée une associations (DL) entre ledit identifiant de session (IS) et à localisation (DX) ou sein dudit réseau (N), et **en ce qu'**à la détection d'un noeud défaillant (N4) au sein dudit réseau pair-s-pair, ledit noeud particulier transmet un message de remplissage (MR) au successeur dudit noeud défaillant (N4), contenant au moins l'identifiant de chaque session dont les données sont mémorisées dans ladite mémoire et dont association (DL) entre l'identifiant de session (IS) et la localisation (DX) était mémorisé dans ledit noeud défaillant.

2. Procédé selon la revendication précédente dans lequel ledit noeud particulier insère en outre dans ladite associations la localisation (DX2) d'un noeud de duplication pour lesdites données (DS) relative à la session.

3. Réseau pair-à-pair (N) constitué d'un ensemble de noeuds (N1, N2, N3, N4, N5), chacun possédant une interface (INT) pour recevoir des requêtes de services (M1, M2, M3) provenant d'un dispositif de répartition de charge (LB), une mémoire (MEM) pour mémoriser des données (DS) relative aux sessions associées auxdites requêtes de service, un processeur (P) pour traiter lesdites requêtés de service en fonction desdites données, et un dispositif de gestion pour détecter une défaillance d'un autre noeud dudit réseau, **caractérisé en ce que** ledit ensemble de noeuds est apte à former une table de hachage distribuée mémorisant des associations (DL) entre des identifiants de session (IS) et la localisation (NX) des données relatives aux sessions correspondantes, **en ce que** chaque noeud est apte à, pour une nouvelle requêtes de services, déterminer s'il possède lui-même les données relatives à la session associée à ladite nouvelle requête de service et dans le cas négatif interroger ladite table de hachage distribuée pour déterminer la localisation desdites données et ledit dispositif de gestion étant prévu pour, lors de la détection d'un noeud défaillant dans ledit ensemble, transmettre un message de remplissage au successeur dudit noeud défaillant contenant au moins l'identifiant de chaque session dont les données sont mémorisées dans ladite mémoire (MEM) et dont l'association entre l'identifiant et la localisation était mémorisé dans ledit noeud défaillant.

## Claims

1. A failure management method for a communication system comprising a peer-to-peer network (N) made up of a set of nodes (N1, N2, N3, N4, N5) capable of processing service requests (M1, M2, M3), and a load-balancing device (LB) operative to route a service request to one particular node of said set, said peer-to-peer network forming a distributed hash table and said particular node determining an identifier (IS) of the session associated with said service request, and if data (DS) related to said session exists within said peer-to-peer network, said method being **characterized in that** if this is not the case, said particular node (N1) creates data (DS) related to said session, saves it within its own memory, and saves within said distributed hash table a match (DL) between said session identifier (IS) and its location (DX) within said network (N), and **in that** upon detecting a failing node (N4) within said peer-to-peer network, said particular node transmits a filling message (MR) to the successor of said failing node (N4), containing at least the identifier of each session whose data is saved within said memory, and whose match (DL) between the session identifier (IS) and the location (DX) had been saved within said failing node.

2. A method according to the preceding claim, wherein said particular node additionally inserts into said match the location (DX2) of a duplication node for said data (DS) related to the session.

3. A peer-to-peer network (N) formed of a set of nodes (N1 N2, N3, N4, N5), each possessing an interface (INT) for receiving service requests (MI, M2, M3) coming from a load-balancing device (LB), a memory (MEM) for saving data (DS) related to the sessions associated with said service requests, a processor (P) for processing said service requests based on said data, and a management device for detecting a failure of another node of said network, **characterized in that** said set of nodes is capable of forming a distributed hash table saving matches (DL) between session identifiers (IS) and the vocations (NX) of the data related to the corresponding sessions, and **in that** each node is capable of, for a new service request, determining whether it itself possesses the data related to the session associated with said knew service request, and if it does not, querying said distributed hash table to determine the location of said data, and said management device being operative to, upon the detection of a failing node (N4) within said set, transmit a filling message to the successor of said failing node, containing at least the identifier of each session whose data is saved within said memory (MEM), and whose match between the session identifier and the location had been saved within said failing node.

## Patentansprüche

1. Verfahren zur Fehlerverwaltung für ein Kommunikationssystem mit einem aus einem Satz von Knoten (N1, N2, N3, N4, N5), die für die Verarbeitung von Dienstanforderungen (M1, M2, M3) ausgelegt sind, bestehenden Peer-to-Peer-Netzwerk (N) und einer für das Weiterleitet einer Dienstanforderung an einen bestimmten Knoten des besagten Satzes vorgesehenen Lastverteilungsvorrichtung (LB), wobei das Peer-to-Peer-Netzwerk eine verteilte Hash-Tabelle bildet und der besagte bestimmte Knoten eine Kennung (OS) der mit der besagten Dienstanforderung assoziierten Sitzung ermittelt, wenn innerhalb des besagten Peer-to-Peer-Netzwerks die besagte Sitzung betreffende Daten (DS) bestehen, wobei das besagte Verfahren **dadurch gekennzeichnet ist, dass**, wenn dies nicht der Fall ist, der besagte bestimmte Knoten (N1) die besagte Sitzung betreffende Daten (DS) erstellt, diese in seinem eigenen Speicher speichert und innerhalb der besagten verteilten Hash-Tabelle eine Zuordnung (DL) zwischen der besagten Kennung der Sitzung (IS) und deren Lokalisierung (DX) innerhalb des besagten Netzwerks (N) speichert, und dass der besagte bestimmte Knoten bei Erkennen eines ausgefallenen Knotens (N4) innerhalb des besagten Peer-to-Peer-Netzwerks eine Füllnachricht (M2) an den Nachfolgen des besagten ausgefallenen Knotens (N4) überträgt, welche mindestens die Kennung einer jeden Sitzung, deren Daten in dem besagten Speicher gespeichert sind und deren Zuordnung (DL) zwischen der Kennung der Sitzung (15) und der Lokalisierung (DX) in dem besagten ausgefallenen Knoten gespeichert war, enthält.

2. Verfahren nach dem vorstehenden Anspruch, wobei der besagte bestimmte Knoten weiterhin die Lokalisierung (DX2) eines Nachbildungsknotens für die besagten die Sitzung betreffenden Daten (des) in die besagte Zuordnung einfügt.

3. Peer-to-Peer-Netzwerk (N), bestehend aus einem Satz von Knoten (N1 N2, N3, N4, N5), wobei ein jeder Knoten eine Schnittstelle (INT) für den Empfang von von einer Lastvrteilungsvorrichtung (LB) ausgegelbenen Dienstanforderungen (M1, M2, M3), einen Speicher (MEM) zum Speichern der die mit den besagten Dienstanforderungen assoziierten Sitzungen betreffenden Daten (DS) einen Prozessor (P) für die Verarbeitung der besagten Dienstanforderungen in Abhängigkeit von den besagten Daten und eine Verwaltungsvorrichtung zur Erfassung eines Ausfalls eines anderen Knotens des besagten Netzwerks aufweist, **dadurch gekennzeichnet, dass** der besagte Satz von Knoten dazu ausgelegt ist, eine verteilte Hash-Tabelle zu bilden, welche die Zuordnungen (DL) zwischen Sitzungskennungen (IS) und der Lokalisierung (NX) der entsprechenden die Sitzung betreffenden Daten zu bilden, dans jeder Knoten dazu ausgelegt ist, für eine neue Dienstanforderung zu ermitteln, ob er selbst in Besitz der Daten in Bezug auf die mit der besagten neuen Dienstanforderung assoziierte Sitzung ist und, wenn dies nicht der Fall ist, die besagte verteilte Hash-Tabelle abzufragen, um die Lokalisierung der besagten Daten zu ermitteln, wobei die besagte Verwaltungsvorrichtung dafür vorgesehen ist, bei Erkennen eines ausgefallenen Knotens in dem besagten Satz eine Füllnachricht an den Nachfolger des besagten ausgefallenen Knotens zu übertrafen, welche mindestens die Kennung einer jeden Sitzung, deren Daten in dem besagten Speicher (MEM) gespeichert sind und deren Zuordnung zwischen der Kennung und der Lokalisierung in dem besagten ausgefallenen Knoten gespeichert war, enthält.
